# EUROPÄISCHE PATENTANMELDUNG

(11) **EP 1 912 462 A1**
(43) Veröffentlichungstag der Anmeldung: **16.04.2008**
(21) Anmeldenummer: 07114490.1
(22) Anmeldetag: 17.08.2007
(51) Int. Cl.: H04Q 7/38

(54) **Verfahren und System zur Verwaltung von Profildaten mindestens eines Nutzers eines Mobilfunknetzes**

(30) Priorität: 09.10.2006 DE 102006047722
(71) Anmelder: Vodafone Holding GmbH, 40213 Düsseldorf (DE)
(72) Erfinder: Alger Dr., Michael, 85540, Haar (DE)
(74) Vertreter: Cullinane, Marietta Bettina

(57) **Zusammenfassung**

Es wird ein Verfahren zur Verwaltung von Profildaten mindestens eines Nutzers eines Mobilfunknetzes beschrieben, wobei das Verfahren zumindest die Erfassung von Positionsangaben des Nutzers umfasst. Das Verfahren zeichnet sich dadurch aus, dass die Positionsangaben mit Zusatzinformationen verarbeitet werden, wobei zumindest eine Zusatzinformation eine geographische Information darstellt, und aufgrund der Verarbeitung Profildaten des mindestens einen Nutzers erzeugt werden. Weiterhin wird ein System (1) zur Verwaltung von Profildaten eines Nutzers eines Mobilfunknetzes beschrieben.

## Beschreibung

Die vorliegende Erfindung betrifft ein Verfahren und ein System zur Verwaltung von Profildaten mindestens eines Nutzers eines Mobilfunknetzes.

Mit den wachsenden Möglichkeiten der Übertragung von Informationen in Mobilfunknetzen steigt insbesondere bei Werbetreibenden das Bedürfnis ihre Inhalte gezielt an geeignete Empfänger übermitteln zu können. Zudem wächst die Anzahl an Angeboten für Produkte und Ereignisse. Anbieter von Produkten und Ereignissen benötigen aber weiterhin Anhaltspunkte über das Kundenverhalten um daraus Kundenwünsche bei weiteren Entwicklungen berücksichtigen zu können.

Um Werbetreibenden das Erreichen von geeigneten Empfängern zu ermöglichen, werden in Mobilfunknetzen so genannte Location-Based-Services angeboten. Hierbei wird die Position des möglichen Empfängers als Anhaltspunkt darüber genutzt, welche Dienste oder Waren für den Empfänger von Interesse sein könnten. Bei Location-Based-Services wird daher einem Empfänger eine Ware oder ein Dienst angeboten, die in dessen derzeitigen Umgebung zur Verfügung stehen. Eine weitere Verarbeitung der Position des möglichen Empfängers erfolgt hierbei nicht.

In der DE 102 48 011 A1 ist ein Verfahren zur ortsabhängigen mobilen Kommunikation beschrieben. Bei diesem Verfahren wird neben der Position des Empfängers die Position des Senders eines Inhaltes bestimmt. Nur wenn die Position des Empfängers mit der Position des Sender zum Zeitpunkt des Sendens der Nachricht übereinstimmt oder sich der Empfänger zumindest in der Nähe der Position des Senders beim Senden der Nachricht befindet, wird dem Empfänger eine bereits früher gesendete und in einer Zentraleinheit verwaltete Nachricht übermittelt.

Weder bei dem beschriebenen Verfahren noch bei anderen Location-Based-Services kann die Position des Nutzers für Werbetreibende und Marktforscher außer der Information über den Aufenthaltsort Auskunft über das Benutzerverhalten geben.

Der Erfindung liegt daher die Aufgabe zugrunde eine Möglichkeit zu schaffen Profildaten von Nutzern eines Mobilfunknetzes auf einfache Weise zu verwalten, insbesondere zu erzeugen.

Der Erfindung liegt die Erkenntnis zugrunde, dass diese Aufgabe gelöst werden kann, indem die in einem Mobilfunknetz erfassbaren Positionsangaben mit Zusatzinformationen verarbeitet werden.

Die Aufgabe wird gelöst durch ein Verfahren mit den Merkmalen des Anspruchs 1 und ein System mit den Merkmalen des Anspruchs 10. Weitere Merkmale und Vorteile ergeben sich aus den Unteransprüchen. Vorteile und Merkmale, die bezüglich des Verfahrens beschrieben werden, gelten, soweit anwendbar, entsprechend für das System und umgekehrt.

Gemäß einem ersten Aspekt wird die Aufgabe gelöst durch ein Verfahren zur Verwaltung von Profildaten mindestens eines Nutzers eines Mobilfunknetzes, das zumindest die Erfassung von Positionsangaben des Nutzers umfasst. Das Verfahren zeichnet sich dadurch aus, dass die Positionsangaben mit Zusatzinformationen verarbeitet werden, wobei zumindest eine Zusatzinformation eine geographische Information darstellt, und aufgrund der Verarbeitung in einer Zentraleinheit Profildaten des mindestens einen Nutzers erzeugt werden.

Die Verwaltung im Sinne der vorliegenden Erfindung umfasst zumindest die Erzeugung, Benutzung und/oder die Weiterleitung von Profildaten mindestens eines Nutzers. Als Profildaten werden im Sinne der Erfindung Daten bezeichnet, die ein Verhaltensmuster oder Präferenzen mindestens eines der Nutzer wiedergibt. Der Nutzer ist in diesem Zusammenhang der Benutzer eines mobilen Endgerätes, beispielsweise eines Mobiltelefons, des Mobilfunknetzes.

Die Positionsangaben, des Nutzers, die erfasst werden, sind vorzugsweise Daten, die beim Betrieb eines Mobilfunknetzes anfassen. Dies können in einem GSM-Netz auf dem Abis Interface die Daten des Mobility Management über Handovers aktiver Verbindungen zwischen Zellen, Anforderungen von Location Updates und dergleichen sein. Somit können die Positionsangaben beispielsweise Zell-Informationen des Mobilfunknetzes und/oder Koordinaten des derzeitigen Aufenthaltsortes des Nutzers darstellen. Die Positionsangaben können an dem mobilen Endgerät ermittelt und/oder von dem mobilen Endgerät übermittelt werden. Es ist aber auch möglich, insbesondere bei Zell-Informationen, dass diese durch ein von dem mobilen Endgerät ausgegebenes Signal hervorgerufen werden, aber an einer netzwerkseitigen Komponente, wie beispielsweise der Basisstation, ermittelt werden.

Die geographische Information beziehungsweise die geographischen Informationen, die Zusatzinformationen darstellen, mit denen die erfassten Positionsangaben verarbeitet werden, können insbesondere Karteninformationen darstellen und somit über die Lage der Position des Nutzers Auskunft geben. Es liegt allerdings auch im Rahmen der Erfindung, dass die geographischen Informationen weitergehende Informationen bezüglich einer bestimmten Position umfassen. Beispielsweise die an einer Position befindlichen Einrichtungen, beispielsweise Golfplatz oder Sportstadion, können geographische Informationen sein, mit denen die Positionsangaben des Nutzers verarbeitet werden.

Die Zentraleinheit, in der die Profildaten erzeugt werden, stellt vorzugsweise eine Rechnereinheit des Mobilfunknetzes dar.

Indem das Verarbeitungsergebnis der Positionsangaben mit Zusatzinformationen zur Erzeugung von Profildaten für den Nutzer verwendet wird, kann aus diesen Daten eine Präferenz oder ein Verhaltensmuster des Nutzers erkannt werden. Es ist hierbei möglich die mit den geographischen Informationen verarbeiteten Positionsangaben unmittelbar für eine weitere Auswertung zur Verfügung zu stellen. Alternativ oder zusätzlich ist es aber auch möglich, dass die verarbeiteten Positionsangaben gespeichert werden. Die Positionsangaben umfassen vorzugsweise eine Zeitangabe über den Erfassungszeitpunkt der Positionsangabe. Durch Speichern der Positionsangaben kann in einem späteren Schritt ein zeitliches Schema erkannt werden.

Vorzugsweise umfassen die Zusatzinformationen zumindest eine Zeitinformation. Diese Zeitinformation oder zeitabhängige Information kann die Dauer des Aufenthaltes eines Nutzers an einer Position, die Häufigkeit des Aufenthaltes des Nutzers an einer Position und/oder Intervalle zwischen Aufenthalten des Nutzers an einer Position umfassen. Bei der Berücksichtigung von Intervallen kann zum einen eine Bewegung des Nutzers ermittelt werden. Zusätzlich kann diese Information auch dazu dienen die geographische Angabe weiter zu spezifizieren. Schließlich kann die Überwachung von Intervallen auch eine zusätzliche Auskunft über die derzeitige Aktivität des Nutzers geben.

Indem eine zeitabhängige Komponente zur Erzeugung der Profildaten verwendet wird, lässt sich das Verhaltensmuster einzelner Nutzer besser bestimmen und weitere Informationen aus den Profildaten ablesen.

Die Zusatzinformationen kann eine Ereignisinformation umfassen. Diese Ereignisinformation stellt eine zeitabhängige Information dar, bei der weitere Umstände beziehungsweise Begebenheiten berücksichtigt werden. So kann für einen bestimmten Ort, beispielsweise ein Stadion, für einen bestimmten Zeitpunkt oder eine bestimmte Zeitdauer, beispielsweise 24. Oktober 2006 von 19:00h bis 23:00h, die Ereignisinformation die weitere Angabe umfassen, dass zu diesem Zeitpunkt an diesem Ort eine bestimmte Band ein Konzert gibt. Neben einer Ortsangabe und einer Zeitangabe umfasst daher die Ereignisinformation Angaben, die über die Präferenzen eines Nutzers Auskunft geben können beziehungsweise diese genauer bestimmt werden können.

Die erzeugten Profildaten des Nutzers werden vorzugsweise mit einem Referenzprofil verglichen. Ein Referenzprofil stellt hierbei vorzugsweise eine Liste von Merkmalskriterien dar, die für einen Werbetreibenden oder Marktforscher von Bedeutung sind. In dem Referenzprofil werden vorzugsweise Kriterien abstrahiert, das heißt unter Oberbegriffen aufgeführt. Diese Oberbegriffe können dann mit den Profildaten, die gegebenenfalls vorab ebenfalls abstrahiert wurden, verglichen. Das Referenzprofil wird vorzugsweise von dem Werbetreibenden, beispielsweise einer Werbeagentur, oder dem Marktforscher erstellt und für das erfindungsgemäße Verfahren zur Verfügung gestellt.

In einer bevorzugten Ausführungsform werden Profildaten mehrerer Nutzer erzeugt und diese mit einem einzigen Referenzprofil verglichen. Durch den Vergleich einer Vielzahl von Profildaten wird es auf einfache Weise möglich mehrere Nutzer, die den in dem Referenzprofil hinterlegten Kriterien entsprechen, in einem einzigen Schritt zu ermitteln. Zudem kann neben dem reinen Erfüllen der Kriterien durch einen einzigen Nutzer bei dieser Vorgehensweise gleichzeitig ein statistischer Wert ermittelt werden.

Gemäß einer Ausführungsform werden die Profildaten mehrerer Nutzer erzeugt und in einer Zentraleinheit gespeichert, bevor die Profildaten mit einem Referenzprofil verglichen werden. Indem die Profildaten in der Zentraleinheit gespeichert werden, stehen diese auch für Vergleiche mit Referenzprofilen, die gegebenenfalls erst nach der Erzeugung der Profildaten erstellt werden, zur Verfügung.

Die Profildaten eines jeden Nutzers können zusätzlich oder alternativ auch unmittelbar nach deren Erzeugung mit einem Referenzprofil verglichen werden. Dies hat zum einen den Vorteil, dass eine Speicherung der Profildaten entfallen kann. Zum anderen wird bei dieser Ausführungsform gewährleistet, dass das Vergleichsergebnis stets das aktuelle Verhalten der Nutzer berücksichtigt.

Das Ergebnis des Vergleichs mit mindestens einem Referenzprofil stellt gemäß einer Ausführungsform ein Filterergebnis dar. Hierdurch kann eine Selektion von Nutzern erfolgen, die den Kriterien des Referenzprofils entsprechen. Es wird daher eine konkrete Zielgruppe für bestimmte Werbemitteilungen ermittelt. Alternativ ist es aber auch möglich, durch den Vergleich eine Statistik zu erhalten. Hierbei werden die Profildaten aller bei dem Vergleich berücksichtigten Nutzer in dem Ergebnis auftauchen und durch Gruppierung gekennzeichnet.

Aufgrund des Vergleichsergebnisses kann gemäß einer Ausführungsform mindestens eine Nachricht an mindestens einen der Nutzer übermittelt werden, dessen Profildaten dem mindestens einen Referenzprofil zumindest teilweise entsprechen. Die Nachricht wird vorzugsweise über das Mobilfunknetz übermittelt, in dem die Positionsangaben des Nutzers ursprünglich erfasst wurden. Die Nachrichten können beispielsweise SMS oder MMS Nachrichten sein.

Es ist alternativ aber auch möglich, dass das Vergleichsergebnis selber übermittelt wird. In diesem Fall kann das Vergleichsergebnis beispielsweise in Form einer Statistik an einen Marktforscher übermittelt werden beziehungsweise diesem zur Verfügung gestellt werden. Die Übermittlung des Vergleichsergebnisses muss hierbei nicht über das Mobilfunknetz erfolgen. Bei dieser Ausführungsform werden das Vergleichsergebnis und/oder die Profildaten vor dem Vergleich anonymisiert.

Die mindestens eine Nachricht, die an mindestens einen der Nutzer übermittelt wird, ist vorzugsweise inhaltlich mit Referenzprofilangaben verknüpft und stellt insbesondere eine Werbenachricht dar. Die inhaltliche Verknüpfung kann beispielsweise durch die Verwendung von Oberbegriffen erfolgen. Hat ein Nutzer beispielsweise ein Konzert einer Rockband besucht, kann diesem Nutzer der Hinweis auf ein weiteres Konzert oder eine CD einer anderen Rockband übermittelt werden. In diesem Fall wird also der Künstler, der das von dem Nutzer besuchte Konzert gegeben hat, unter den Oberbegriff Rockband gestellt. Ein Konzert kann aber zusätzlich oder alternativ auch unter den Oberbegriff einer Live-Veranstaltung gefasst werden. Somit kann dem Nutzer, der das Konzert besucht hat, eine Information darüber übermittelt werden, wann eine weitere Live-Veranstaltung stattfindet.

Gemäß einem weiteren Aspekt betrifft die Erfindung ein System zur Verwaltung von Profildaten eines Nutzers eines Mobilfunknetzes, wobei das System zumindest eine Zentraleinheit umfasst, die zumindest eine Empfangseinheit zum Empfang von Positionsangaben und zumindest eine Speichereinheit aufweist. Das System zeichnet sich dadurch aus, dass die Zentraleinheit zumindest eine Auswertungseinheit umfasst, die mit der Empfangseinheit und einer Speichereinheit für zeitabhängige Informationen zur Auswertung zumindest eines Teils der empfangenen Positionsangaben mit zumindest einem Teil der gespeicherten zeitabhängigen Informationen verbunden ist.

Die Verbindung der Empfangseinheit mit der Auswertungseinheit kann mittelbar oder unmittelbar sein. Insbesondere kann zwischen der Empfangseinheit und der Auswertungseinheit eine Verarbeitungseinheit vorgesehen sein, in der empfangene Positionsangaben mit geographischen Informationen verarbeitet werden. Alternativ können die an der Empfangseinheit empfangenen Positionsangaben bereits mit geographischen Informationen verarbeitet sein. Eine solche Verarbeitung kann beispielsweise in einem mobilen Endgerät des Nutzers oder einer anderen netzwerkseitigen Komponente des Systems erfolgt sein.

Indem die Auswertungseinheit in der Zentraleinheit vorgesehen ist, können die von der Auswertungseinheit erzeugten Profildaten innerhalb der Zentraleinheit weiter verarbeitet werden. Insbesondere kann eine dezentrale und damit aufwändige Auswertung von Positionsangaben vermieden werden und die Weitergabe von Informationen bezüglich eines Benutzers an Dritte verhindert werden.

Vorzugsweise weist das System eine Vergleichseinheit auf, wobei die Vergleichseinheit mit einer Speichereinheit zur Speicherung von Referenzprofilen verbunden ist. In der Vergleichseinheit können somit Übereinstimmungen von Profildaten mit Kriterien einzelner Referenzprofile ermittelt werden. Durch Speicherung der Referenzprofile in der Zentraleinheit, können diese zu unterschiedlichen Zeitpunkten und auch mehrfach verwendet werden.

Das erfindungsgemäße System ist zur Ausführung mindestens einer der Ausführungsformen des erfindungsgemäßen Verfahrens ausgelegt.

Die Einheiten des erfindungsgemäßen Systems können durch Hardwarelösungen und/oder Softwarelösungen realisiert sein. Es ist auch möglich, dass eine oder mehrere der erfindungsgemäß vorgesehenen Einheiten in einer gemeinsamen Einheit realisiert sind.

Die Erfindung wird im Folgenden erneut anhand der beiliegenden Figuren beschrieben. Es zeigen:
Figur 1: einen schematischen Aufbau des erfindungsgemäßen Systems; und
Figur 2: einen schematischen Ablauf einer Ausführungsform des erfindungsgemäßen Verfahrens.

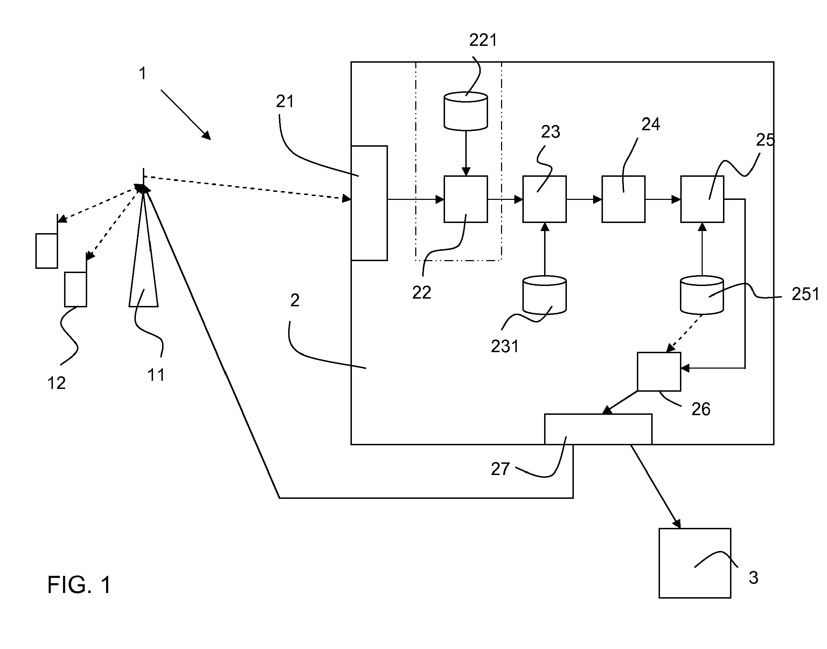

In Figur 1 ist der Aufbau einer möglichen Ausführungsform des erfindungsgemäßen Systems 1 gezeigt. Das System 1 umfasst eine Zentraleinheit 2, die Teil eines Mobilfunknetzes sein kann und insbesondere dem Betreiber des Mobilfunknetzes zugeordnet ist. Die Zentraleinheit 2 weist eine Empfangseinheit 21 auf. Diese Empfangseinheit 21 steht zumindest zeitweise in Kommunikation mit zumindest einer weiteren Komponente eines Mobilfunknetzes. Diese Komponente ist in der dargestellten Ausführungsform als Basisstation 11 gezeigt. Es versteht sich aber, dass die Kommunikation nicht unmittelbar zwischen der Basisstation 11 und der Zentraleinheit 2 erfolgen muss. Entsprechend der Netzwerkstruktur des Mobilfunknetzes sind in der Regel für die Kommunikation zwischen der Zentraleinheit 2 und der Basisstation 11 weitere Komponenten zwischengeschaltet. Die Basisstation 11 dient unter anderem für den Empfang von Signalen von einem oder mehreren mobilen Endgeräten 12, die beispielsweise Mobiltelefone darstellen.

In der Zentraleinheit 2 ist die Empfangseinheit 21 mit einer Verarbeitungseinheit 22 verbunden. Die Verarbeitungseinheit 22 weist hierbei einen Eingang für Informationen aus einer Speichereinheit 221 für geographische Informationen auf. Der Ausgang der Verarbeitungseinheit 22 ist mit einer Auswertungseinheit 23 verbunden, die wiederum einen Eingang für Informationen aus einer Speichereinheit 231 für zeitabhängige Informationen und/oder Ereignisinformationen aufweist. An die Auswertungseinheit 23 schließt sich eine Speicher-M/eiterleitungseinheit 24 an, die zu einer Vergleichseinheit 25 führt. Die Vergleichseinheit 25 besitzt einen Eingang für Referenzprofildaten von einer Speichereinheit 251 für Referenzprofile. Die Vergleichseinheit 25 und gegebenenfalls auch die Speichereinheit 251 für Referenzprofile ist mit einer Nachrichtenerzeugungs- / Weiterleitungseinheit 26 verbunden. An diese Nachrichtenerzeugungs- / Weiterleitungseinheit 26 schließt sich eine Ausgabeeinheit 27 an.

Die Ausgabeeinheit 27 kann zur Übermittlung von Daten/Informationen in dem Mobilfunknetz und/oder zur Übermittlung an eine externe Einheit 3, die beispielsweise einem Marktforscher zugeordnet ist, ausgelegt sein.

Wie in Figur 1 angedeutet, kann die Verarbeitungseinheit 22 sowie die dieser zugeordnete Speichereinheit 221 für geographische Informationen auch außerhalb der Zentraleinheit 2, das heißt vor der Empfangseinheit 21 liegen. Auch die weiteren Einheiten in der Zentraleinheit 2 können eine von der dargestellten Anordnung beziehungsweise Einbindung abweichende Anordnung aufweisen oder teilweise entfallen.

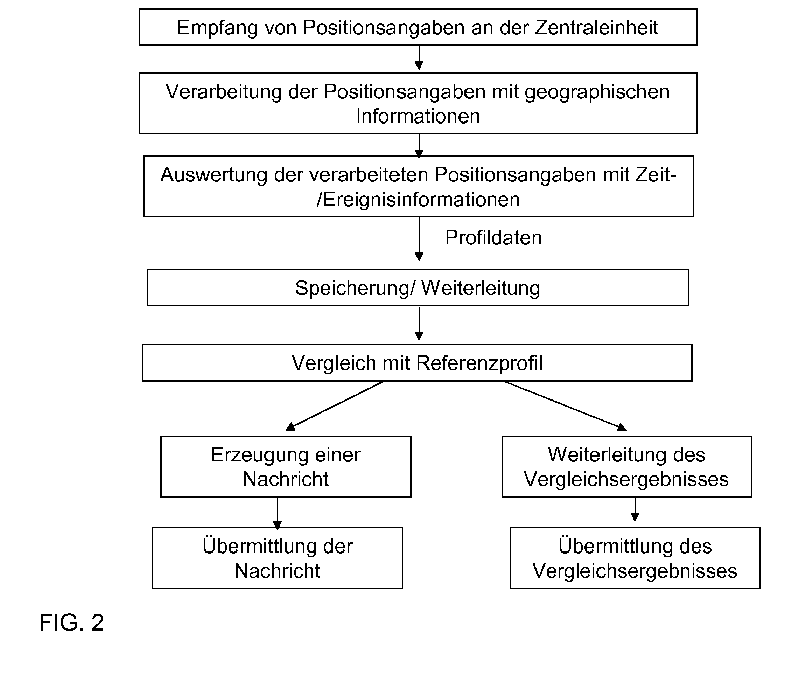

Eine Ausführungsform des erfindungsgemäßen Verfahrens wird nun unter Bezugnahme auf Figur 1 und Figur 2 beschrieben, wobei Figur 2 einen schematischen Ablauf des Verfahrens zeigt. Hierbei wird zunächst nur ein Nutzer betrachtet. Es versteht sich aber, dass das Verfahren vorzugsweise für mehrere, insbesondere für alle Nutzer eines Mobilfunknetzes durchgeführt wird.

An der Zentraleinheit 2 werden Positionsangaben eines Nutzers empfangen. Diese können beispielsweise aus dem Vorgang des Zellwechsels, dem so genannten Handover, in einem zellularen Mobilfunknetz ermittelt worden sein. Diese erhaltenen Positionsangaben werden mit gespeicherten geographischen Informationen verarbeitet. Die so ermittelten Angaben können entweder unmittelbar einer Auswertung zugeführt werden oder aber in einer weiteren Speichereinheit (nicht dargestellt) gespeichert werden. Im letzteren Fall werden die verarbeiteten Positionsangaben eines Nutzers zusammen mit zuvor für diesen Nutzer ermittelten und verarbeiteten Positionsangaben gespeichert. Aus diesen gemeinsam gespeicherten Positionsangaben lassen sich bestimmte zeitliche Schemata erkennen.

Die verarbeiteten und gegebenenfalls mit weiteren verarbeiteten Positionsangaben gespeicherten Positionsangaben werden anschließend ausgewertet. Hierbei werden Zeitinformationen und / oder Ereignisinformationen berücksichtigt und so aus den Positionsangaben zuverlässige Profildaten des Nutzers erzeugt.

Diese Profildaten können gespeichert und für zukünftige Verwendungen bereitgehalten werden. Alternativ oder zusätzlich können die Profildaten aber auch weitergeleitet werden, um mit einem oder mehreren Referenzprofilen verglichen zu werden.

Das Vergleichergebnis kann entweder an eine Dritte Partei in anonymisierter Form, beispielsweise in Form von statistischen Daten, weiter geleitet werden oder als Basis zur Übermittlung von Nachrichten an den Nutzer dienen.

Die Erfindung wird nun anhand einiger Beispiele beschrieben.

In einem ersten Beispiel hält sich ein Nutzer in einem Stadion auf und besucht dort ein Konzert. Positionsangaben, die in einem Mobilfunknetz anfallen, beispielsweise Zellinformationen, werden von dem mobilen Endgerät, das der Nutzer bei dem Konzertbesuch bei sich trägt, an die Zentraleinheit 2 übermittelt und an der Empfangseinheit 21 empfangen. Diese Positionsangaben werden anschließend in der Verarbeitungseinheit 22 so verarbeitet, dass diese Auskunft über den Aufenthaltsort des Nutzers geben. Hierzu kann die Position der erkannten Zelle mit einer Karte abgeglichen werden. Zudem kann in der Speichereinheit 221 hinterlegt sein, dass sich an diesem Ort ein Stadion befindet. Mit den Positionsangaben werden in der Regel zeitliche Angaben über die Erfassung der Positionsangaben erfasst und an die Zentraleinheit 2 übermittelt. Somit stellt der Ausgang der Verarbeitungseinheit 22 die Information dar, dass sich der Nutzer zu einem gewissen Zeitpunkt an dem Ort des Stadions aufgehalten hat.

Um ein zufälliges Vorbeifahren an dem Stadion bei der Analyse auszuschließen, können die Positionsangaben vorzugsweise mehrfach hintereinander an der Zentraleinheit 2 empfangen werden und die verarbeiteten Positionsangaben jeweils gespeichert werden. Stimmen die aus der Verarbeitung der Positionsangaben erhaltenen Informationen mehrfach überein, lässt sich daraus schließen, dass sich der Nutzer in dem Stadion aufhält.

Die Information, dass sich der Nutzer in dem Stadion zu einem gewissen Zeitpunkt aufhält, kann in der Auswertungseinheit 23 mit Angaben über Ereignisse ausgewertet werden. In der Speichereinheit 231 ist hinterlegt, dass in dem Stadion zu diesem Zeitpunkt ein Konzert der Band "XYZ" stattfindet. Der Ausgang der Auswertungseinheit 23 stellt somit die Information dar, dass der Nutzer das Konzert der Band "XYZ" besucht.

Diese Information beziehungsweise dieses Nutzerprofil wird gespeichert und/oder unmittelbar an eine Vergleichseinheit 25 weitergeleitet. Ein Werbetreibender, der für die Vermarktung von musikbezogenen Produkten, wie beispielsweise CD's oder Konzertkarten zuständig ist, kann in der Zentraleinheit 2 ein Referenzprofil hinterlegt haben. Dieses Referenzprofil hat hierbei beispielsweise den Inhalt, dass Nutzer, die an einem Rockkonzert teilnehmen mit Nachrichten, die ebenfalls indem Referenzprofil hinterlegt sein können oder aus einer externen Quelle bezogen werden können, versorgt werden sollen. Sofern es sich bei der Band "XYZ" um eine Rockband handelt, wird somit eine Nachricht, beispielsweise in Form einer SMS erzeugt, die den Nutzer über weitere Ereignisse oder Produkte von Rockbands informiert.

Die Zuordnung der Band "XYZ" zu dem Oberbegriff Rockband kann in dem Referenzprofil hinterlegt sein. Es ist aber auch möglich, dass diese Kategorisierung in der Ereignisinformation bereits angegeben ist. Es ist somit auf einfache Weise möglich einen Nutzer über Produkte und Angebote, die für Ihn von Interesse sind, zu informieren.

In einem weiteren Beispiel hält sich der Nutzer regelmäßig am Wochenende in Tirol auf. Dies kann mittels der in dem Mobilfunknetz anfallenden Daten beziehungsweise Positionsangaben ermittelt werden. In diesem Fall werden die Positionsangaben ebenfalls, wie bei dem eben beschriebenen Beispiel des Konzertbesuches, mehrfach empfangen und entsprechend gespeichert beziehungsweise abgeglichen. Wird bei diesem Abgleich festgestellt, dass sich der Nutzer an den Wochenenden in Tirol aufhält, kann weiterhin die Dauer der Verfügbarkeit der Positionsangaben vom Netzwerk überprüft werden. Wird hierbei festgestellt, dass die Positionsangaben des Netzwerkes zeitweise ausbleiben, ist dies eine Angabe darüber, dass der Nutzer die Netzabdeckung kurzeitig verlässt. Bei Kombination dieser Angabe mit der geographischen Angabe, dass sich der Nutzer in Tirol aufhält, wird die Angabe erzeugt, dass der Nutzer mit höchster Wahrscheinlichkeit wandert oder, falls die Werte im Winter erfasst werden, Ski läuft. Diese Profildaten können dann mit Referenzprofilen verglichen werden. Hat ein Werbetreibender als Zielgruppe Wanderer oder Skifahrer angegeben, so kann dem Nutzer eine entsprechende Nachricht des Werbetreibenden übermittelt werden.

Werden Positionsangaben mehrer Nutzer erfasst und daraus Profildaten für die einzelnen Nutzer erstellt beziehungsweise erzeugt, so können diese als Datenmenge für Werbetreibende dienen, aus der mittels des Referenzprofils die geeigneten Adressaten für Werbebotschaften ermittelt werden können. Zudem kann die so ermittelte Datenmenge auch für Marktforscher nützlich sein und diesen von der Zentraleinheit 2 zur Verfügung gestellt werden. So kann beispielsweise die Angabe gemacht werden, dass eine Anzahl X der Nutzer eines bestimmten Mobilfunknetzes regelmäßig in Tirol zum Wandern sind.

Mit der vorliegenden Erfindung wird es somit möglich Marktforschern Informationen über das Freizeitverhalten eines Mitglieds einer gewissen Zielgruppe zu liefern. Zudem kann mit der vorliegenden Erfindung sichergestellt werden, dass beispielsweise einem Golfspieler andere Angebote zukommen werden als einem Bergsteiger. Auch können einem Vielflieger, der durch häufige Aufenthalte an Flughäfen mit sich daran anschließendem Ausbleiben der Positionsangaben (während des Fluges) identifiziert werden kann, andere Angebot zukommen, als einem Nutzer, der sich stets in einer bestimmten Region aufhält.

Erfindungsgemäß wird dies ermöglicht, indem gewisse beim Betrieb eines Mobilfunknetzes anfallende Daten beziehungsweise Positionsangaben verwendet werden, mit geographischen Daten und/oder ereignisgesteuerten Daten und mit Vergleichs- beziehungsweise Referenzprofilen verknüpft werden.

Vorzugsweise werden hierbei zunächst die Mobilfunkdaten in geographische Daten umgewandelt, wobei gleichzeitig oder anschließend eine Bewegung über einen bestimmten Weg und/oder der Aufenthalt in einem bestimmten Gebiet zu einer bestimmten Zeit erkannt werden. Durch eine Datenbank, die weitere geographische Daten (Golfplätze, Theater, Stadien, Innenstädte etc.) und Ereignisdaten, wie Konzerttermine und Konzertorte, umfasst, kann das Ergebnis weiter verfeinert werden.

Vorzugsweise werden die Daten aller Nutzer eines Mobilfunknetzes erfasst. Durch Abgleich der Daten und Vergleich mit Referenzprofilen entsteht somit für jeden Nutzer ein Profil. Da diese Daten streng geheim sind, können diese nicht an Dritte weiter gegeben werden. Bei der Erfindung ist die Weiterleitung der Informationen an Dritte nicht erforderliche, da die Wünsche des Dritten in dem Referenzprofil berücksichtigt werden können. Mittels dieses Referenzprofils kann ohne Einbeziehung Dritter eine gewünschte Nachricht an die entsprechenden Nutzer übermittelt werden.

## Patentansprüche

1. Verfahren zur Verwaltung von Profildaten mindestens eines Nutzers eines Mobilfunknetzes, das zumindest die Erfassung von Positionsangaben des Nutzers umfasst, **dadurch gekennzeichnet, dass** die Positionsangaben mit Zusatzinformationen verarbeitet werden, wobei zumindest eine Zusatzinformation eine geographische Information darstellt, und aufgrund der Verarbeitung Profildaten des mindestens einen Nutzers erzeugt werden.

2. Verfahren nach Anspruch 1, **dadurch gekennzeichnet, dass** die Zusatzinformationen eine Zeitinformation und/oder eine Ereignisinformation umfassen.

3. Verfahren nach einem der Ansprüche 1 oder 2, **dadurch gekennzeichnet, dass** die erzeugten Profildaten des Nutzers mit einem Referenzprofil verglichen werden.

4. Verfahren nach einem der Ansprüche 1 bis 3, **dadurch gekennzeichnet, dass** Profildaten mehrerer Nutzer erzeugt werden und diese mit einem einzigen Referenzprofil verglichen werden.

5. Verfahren nach einem der Ansprüche 1 bis 4, **dadurch gekennzeichnet, dass** die Profildaten mehrerer Nutzer erzeugt und in einer Zentraleinheit (2) gespeichert werden, bevor die Profildaten mit einem Referenzprofil verglichen werden.

6. Verfahren nach einem der Ansprüche 1 bis 5, **dadurch gekennzeichnet, dass** die Profildaten eines jeden Nutzers unmittelbar nach deren Erzeugung mit einem Referenzprofil verglichen werden.

7. Verfahren nach Anspruch 6, **dadurch gekennzeichnet, dass** das Ergebnis des Vergleichs mit mindestens einem Referenzprofil ein Filterergebnis darstellt.

8. Verfahren nach einem der Ansprüche 3 bis 7, **dadurch gekennzeichnet, dass** aufgrund des Vergleichsergebnisses mindestens eine Nachricht an mindestens einen der Nutzer übermittelt wird, dessen Profildaten dem mindestens einen Referenzprofil zumindest teilweise entsprechen.

9. Verfahren nach Anspruch 8, **dadurch gekennzeichnet, dass** die mindestens eine Nachricht inhaltlich mit Referenzprofilangaben verknüpft ist und insbesondere eine Werbenachricht darstellt.

10. System zur Verwaltung von Profildaten eines Nutzers eines Mobilfunknetzes, wobei das System (1) zumindest eine Zentraleinheit (2) umfasst, die zumindest eine Empfangseinheit (21) zum Empfang von Positionsangaben und zumindest eine Speichereinheit (221, 231, 251) aufweist, **dadurch gekennzeichnet, dass** die Zentraleinheit (2) zumindest eine Auswertungseinheit (23) umfasst, die mit der Empfangseinheit (21) und einer Speichereinheit (231) für zeitabhängige Informationen zur Auswertung zumindest eines Teils der empfangenen Positionsangaben mit zumindest einem Teil der gespeicherten zeitabhängigen Informationen verbunden ist.

11. System nach Anspruch 10, **dadurch gekennzeichnet, dass** das System eine Vergleichseinheit (25) aufweist, wobei die Vergleichseinheit (25) mit einer Speichereinheit (251) zur Speicherung von Referenzprofilen verbunden ist.

12. System nach einem der Ansprüche 10 bis 11, **dadurch gekennzeichnet, dass** dieses zur Ausführung des Verfahrens nach einem der Ansprüche 1 bis 9 ausgelegt ist.
